Europäisches Patentamt

European Patent Office

Office européen des brevets

(19)

(11) EP 0 858 066 A1

(12) DEMANDE DE BREVET EUROPEEN

(43) Date de publication:
12.08.1998 Bulletin 1998/33

(51) Int Cl.⁶: $G09G\ 3/36$, $H04N\ 3/12$

(21) Numéro de dépôt: 98200158.8

(22) Date de dépôt: 22.01.1998

(84) Etats contractants désignés:
AT BE CH DE DK ES FI FR GB GR IE IT LI LU MC
NL PT SE

(30) Priorité: 03.02.1997 FR 9701169

(71) Demandeur: Philips Electronics N.V.
5621 BA Eindhoven (NL)

(72) Inventeur: Guimier, Stéphane-Pascal
75008 Paris (FR)

(74) Mandataire: Chaffraix, Jean
Société Civile S.P.I.D.
156, Boulevard Haussmann
75008 Paris (FR)

(54) **Procédé et dispositif de conversion de debit d'images numériques**

(57) L'invention concerne un procédé et un dispositif de conversion de signaux numériques pour convertir un débit d'images d'entrées en un débit d'images de sorties, les images d'entrée étant constituées d'une pluralité de trames de données d'entrée. Le procédé selon l'invention consiste en une étape de stockage pour mémoriser lesdites trames d'entrée, une étape de calcul pour fournir une moyenne glissante calculée sur une pluralité de trames stockées et une étape de prélèvement desdites moyennes pour fournir des images de sortie à un rythme fixé par le débit d'images de sortie. Le dispositif selon l'invention comporte des moyens pour mettre en oeuvre ce procédé.

Référence : figure 1.

Applications : visualisation d'images destinées à un LCD sur un téléviseur, visiophone, systèmes de télésurveillance, télévision numérique, etc.

FIG. 1

EP 0 858 066 A1

## Description

L'invention concerne un procédé et un dispositif de conversion de signaux numériques pour convertir un débit d'images d'entrée en un débit d'images de sortie, lesdites images d'entrée étant formées de trames de données d'entrée.

De tels procédé et dispositif ont d'importantes applications dans le domaine de la transmission d'images animées, notamment pour visualiser sur un écran de télévision des images provenant d'un dispositif muni d'un écran d'affichage à cristaux liquides. D'autres applications de l'invention sont envisageables comme le visiophone, les systèmes de télésurveillance ou la télévision numérique.

Les écrans d'affichage à cristaux liquides ou LCD (Liquid Cristal Display) disponibles dans les dispositifs électroniques du commerce sont généralement destinés à l'affichage d'informations alphanumériques ou d'images fixes mais sont inadaptés aux images cinématiques. En effet, le débit d'images sur un LCD, de l'ordre de 3 à 6 images par seconde, est trop faible pour donner une bonne restitution visuelle des images mobiles et un effet désagréable de saccades apparaît. Pour obtenir une bonne qualité d'images animées, le débit d'affichage doit être supérieur ou égal à 25 images par seconde. D'autre part, la petite taille des LCD usuels ne permet pas d'obtenir une précision d'image suffisante pour une application à des images animées.

C'est pourquoi il est intéressant de pouvoir augmenter le débit d'images originellement destinées à un LCD, de 3 à 6 images par seconde, pour les visualiser confortablement, à l'aide d'un moniteur de visualisation (notamment un téléviseur) alimenté par 25 images minimum par seconde.

Un objet de l'invention est donc de fournir un moyen pour augmenter le débit d'images destinées à être affichées sur un LCD afin de rendre ce débit compatible avec le débit des images vidéo.

Une méthode du type présenté ci-dessus est connue du document EP 0701368A2. Bien qu'orienté vers une application différente de celle envisagée dans la présente demande, ce document divulgue le principe selon lequel le débit d'images numériques fourni par un dispositif de visualisation électronique peut être augmenté artificiellement en combinant les données d'entrée du dispositif. La méthode décrite repose sur un principe de répétition des images constituées des données d'entrée pour obtenir en sortie un débit d'images supérieur à celui fourni par la succession d'exemplaires uniques de chaque image.

Pour notre application cette méthode engendre un certain nombre d'inconvénients. En effet, le faible débit fourni par le système LCD implique que les images animées successives sont temporellement assez éloignées les unes des autres et sont donc sensiblement différentes. La répétition de ces images pour en augmenter le nombre (donc le débit) reste efficace pour visualiser des images fixes mais pas pour des images animées qui, de plus, sont éloignées dans le temps. En effet, la succession d'images ainsi construites procure une impression visuelle de discontinuité dans le mouvement, ce que la présente invention propose de rendre moins perceptible.

Pour cela, un procédé du type mentionné dans le préambule est caractérisé en ce qu'il comporte :

- une étape de stockage pour mémoriser des trames de données d'entrée,
- une étape de calcul de moyenne pour fournir une moyenne glissante calculée sur une pluralité de trames stockées,
- une étape de prélèvement desdites moyennes pour fournir les images de sortie à un rythme fixé par le débit d'images de sortie.

Il est aussi prévu un dispositif tel que mentionné dans le préambule caractérisé en ce qu'il comporte :

- des moyens de stockage pour mémoriser des trames de données d'entrée,
- une cellule de calcul munie d'un moyen pour fournir une moyenne glissante calculée sur une pluralité de trames stockées,
- un moyen pour prélever lesdites moyennes et pour fournir les images de sortie à un rythme fixé par le débit d'images de sortie.

Selon une caractéristique de l'invention, un procédé du genre déjà mentionné est remarquable en ce que l'étape de calcul de moyenne est précédée d'une étape de décision pour déclencher le calcul d'une moyenne arithmétique sur une pluralité de trames stockées.

Selon cette caractéristique, un dispositif du genre déjà mentionné est remarquable en ce que la cellule de calcul est munie:

- d'un moyen pour fournir une moyenne arithmétique calculée sur une pluralité de trames,
- d'un dispositif de commande pour déclencher le calcul de la moyenne arithmétique.

Ainsi, on effectue périodiquement ou à des instants quelconques, le calcul de la moyenne arithmétique sur N trames à la place du calcul systématique de la moyenne glissante, N étant de préférence le nombre de trames nécessaires à la constitution d'une image numérique. Le calcul de la moyenne arithmétique n'utilisant pas de résultat de calculs précédents, on obtient une nouvelle image privée des erreurs éventuellement propagées par le calcul des moyennes glissantes précédentes.

La description suivante, faite en regard des dessins ci-annexés, le tout donné à titre d'exemple non limitatif fera bien comprendre comment l'invention peut être réalisée.

La figure 1 représente un exemple d'application de l'invention.
La figure 2 représente le format d'une image numérique pour un écran d'affichage à cristaux liquides.
La figure 3 illustre le procédé selon l'invention pour convertir un débit d'images numériques.
La figure 4 représente un organigramme illustrant un mode de réalisation du procédé de conversion de débit selon l'invention.
La figure 5 représente un schéma bloc d'un mode de réalisation préféré d'un dispositif de conversion de débit d'images numériques selon l'invention.

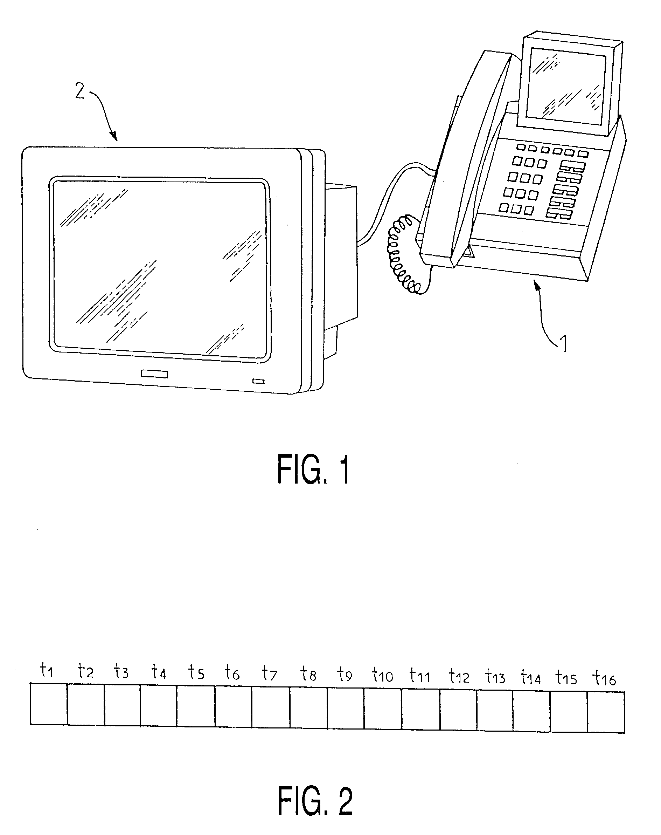

Le dispositif représenté à la figure 1 est constitué d'un téléphone 1 muni d'un système d'affichage LCD relié à un moniteur de visualisation 2 (ici un téléviseur) pour afficher sur le moniteur 2 des images originellement destinées au LCD.

Une image vidéo est composée de deux trames entrelacées. Comme la fréquence de balayage d'un téléviseur est généralement voisine de 50 Hertz, le débit d'images vidéo est donc de 25 images par seconde. En revanche, une image sur un LCD est affichée après 16 balayages successifs des 76800 (320 * 240) pixels de l'écran. Une image visualisée sur un LCD est donc constituée de 16 trames non entrelacées. La fréquence de balayage d'un LCD variant entre 50 et 100 Hertz, son débit peut varier entre 3 et 6 images par seconde. Ce faible débit explique que les LCD ne sont adaptés qu'aux images fixes.

La figure 2 représente le format d'une image numérique pour un LCD. Elle se compose de 16 trames, notées $t_1$ à $t_{16}$, correspondant aux 16 balayages successifs de l'écran. Chaque trame contient des données relatives à l'état de tous les pixels de l'écran, à un instant donné. Chaque pixel du LCD est donc susceptible d'être excité à chaque balayage, c'est-à-dire de 0 à 16 fois pour constituer une image. La nature binaire des pixels nécessite d'effectuer une moyenne sur un grand nombre de trames avant d'afficher le résultat à l'écran si l'on veut observer un niveau de détails acceptable sur une image monochrome. Les 16 trames permettent d'obtenir une impression visuelle de 16 niveaux de gris alors que chaque pixel ne peut être que dans deux états, excité ou inactif, ce qui correspond à deux teintes seulement. Les images étant espacées temporellement du temps nécessaire à 16 balayages consécutifs, l'état "moyen" d'un pixel durant 16 balayages (représentant un point de l'image visuelle) est susceptible de beaucoup varier d'une image à l'autre.

C'est pourquoi la méthode connue qui consiste à répéter un certain nombre de fois la même image afin d'augmenter le débit de sortie est inadapté au format des images destinées aux LCDs. En effet, on observerait des "sauts" d'images induisant une discontinuité visuelle dans le mouvement, désagréable pour l'utilisateur.

Le procédé selon l'invention de conversion de signaux numériques pour augmenter le débit d'images destinées notamment à un LCD va maintenant être décrit en détails.

Les trames de données représentant l'état de chaque pixel à un instant donné sont fournies à une fréquence comprise entre 50 et 100 Hertz. Quant au débit, il n'est que de 3 à 6 images par seconde. Ce décalage provient du fait qu'il faut attendre 16 trames de données avant d'être en mesure d'afficher une image complète à l'écran LCD.

Le principe de l'invention consiste à exploiter les données des trames au fur et à mesure de leur réception pour produire de nouvelles images numériques destinées à augmenter le débit d'images de sortie. Pour cela, on utilise une méthode de calcul couramment employée dans de nombreux domaines où intervient le lissage de valeurs numériques. Il s'agit du calcul de moyennes glissantes, appliqué ici au traitement d'images. On calcule la moyenne glissante des états des pixels sur les 16 dernières trames reçues, le résultat du chaque calcul de moyenne produisant une nouvelle image. Ce calcul peut être effectué à chaque nouvelle trame reçue ou bien toute les 2, 3, ....., 15 trames, selon le débit d'images de sortie désiré.

Selon un mode de réalisation préféré de l'invention, une nouvelle image est produite toute les deux trames. Le calcul de la moyenne des états des pixels sur les 16 dernières trames fournit une image complète et en renouvelant l'opération dès que l'on a reçu 2 nouvelles trames on obtient d'autres images distinctes. Le débit d'images d'entrée est proportionnel au débit des trames de données d'entrée avec un coefficient de proportionnalité égal à 1/16. On obtient ainsi en sortie un débit 8 fois supérieur au débit originel des images d'entrée (ou deux fois inférieur au débit des trames), soit un débit de 24 à 48 images par seconde.

Le débit maximum de 96 images par seconde pouvant être obtenu par ce procédé est réalisé si l'on produit une image à chaque trame reçue, mais il exige une puissance de calcul très supérieure à celle nécessaire pour obtenir un débit de 48 images par seconde. Pour l'application à la vidéo envisagée plus haut, un débit de sortie de 48 images par seconde est largement suffisant pour respecter le standard de la télévision qui n'en exige que 25.

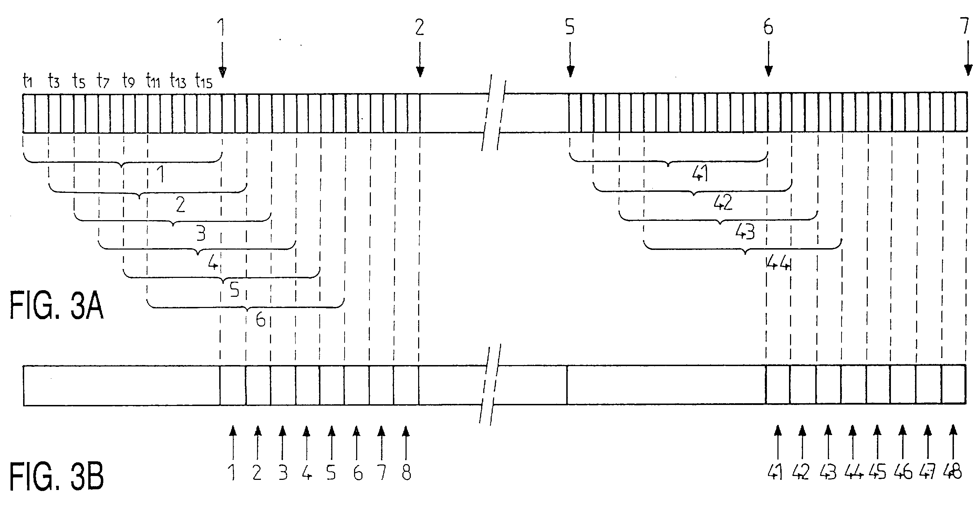

Le procédé est illustré à la figure 3. En <u>A</u> sont représentées les images d'origine constituées respectivement de 16 trames de données, affichées sur un LCD au débit de 6 images par seconde. En <u>B</u> sont représentées les images de sortie prélevées au rythme de 48 images par seconde à partir des images d'origine.

La figure 3 illustre en particulier la phase de démarrage du système. La première moyenne est calculée sur les 16 premières trames de données reçues, référencées $t_1$ à $t_{16}$ et le résultat constitue la première image disponible. On considère ensuite les 14 dernières de ces trames précédemment reçues, c'est-à-dire les trames $t_3$ à $t_{16}$, ainsi que les deux trames suivantes $t_{17}$ et $t_{18}$. On calcule alors la moyenne des trames $t_3$ à $t_{18}$ pour construire la deuxième image disponible. Les trames $t_1$ et $t_2$ sont alors perdues. Toutes les images sont ainsi construites. Par exemple, la dixième image est issue du calcul de la moyenne des trames $t_{19}$ à $t_{25}$, les trames $t_1$ à $t_{18}$ étant perdues.

Ainsi, le procédé selon l'invention fournit un moyen simple et avantageux pour augmenter artificiellement le débit d'images de sortie sans modifier la structure des données d'entrée ni exiger des données supplémentaires.

Afin de limiter le nombre de calculs, une méthode avantageuse est proposée et illustrée par le tableau suivant. On utilise des variables Vi, contenant les données de deux trames consécutives. Physiquement, les variables Vi représentent respectivement des images numériques inachevées qui, une fois combinées entre elles, constituent une image complète.

| Instant $\tau$ | Instant $(\tau+1)$ | Instant $(\tau+2)$ |
|---|---|---|
| V1 | V2 | V3 |
| V2 | V3 | V4 |
| V3 | V4 | V5 |
| V4 | V5 | V6 |
| V5 | V6 | V7 |
| V6 | V7 | V8 |
| V7 | V8 | V9 |
| V8 | V9 | V10 |
| $R\tau$ | $R(\tau+1)$ | $R(\tau+2)$ |

Les trames étant traitées deux par deux, le tableau présente uniquement des sommes de deux trames successives. V1 est la somme des trames $t_1$ et $t_2$, V2 des trames $t_3$ et $t_4$, etc. La moyenne des trames $t_1$ à $t_{16}$ représentée dans le tableau par $R(\tau)$ est calculée à l'instant $\tau$, celle des trames $t_3$ à $t_{18}$ représentée par $R(\tau+1)$ est calculée à l'instant $\tau +$ 1 et celle des trames $t_5$ à $t_{20}$ représentée par $R(\tau+2)$ est calculée à l'instant $\tau + 2$.

Les calculs sont effectués comme indiqué ci-après. Soit :

$$R_\tau = \sum_{j=1}^{8} \frac{V_j}{8} = \frac{V_j}{8} + \sum_{j=2}^{8} \frac{V_j}{8}$$

$$R_{(\tau+1)} = \sum_{j=1}^{8} \frac{V_{(j+1)}}{8} = \frac{V_9}{8} + \sum_{j=2}^{8} \frac{V_j}{8}$$

$$R_{(\tau+1)} = \frac{V_2}{8} + \sum_{j=3}^{9} \frac{V_j}{8}$$

$$R_{(\tau+2)} = \sum_{j=1}^{8} \frac{V_{(j+2)}}{8} = \frac{V_{10}}{8} + \sum_{j=3}^{9} \frac{V_j}{8}$$

Soit :

$$\phi_1 = R_{(\tau+1)} - R_\tau$$

$$\phi_1 = \frac{V_9 - V_1}{8}$$

et :

$$\phi_2 = R_{(\tau+2)} - R_{(\tau+1)}$$

$$\phi_2 = \frac{V_{10} - V_2}{8}$$

on a :

$$R_{(\tau+1)} = R_\tau + \phi_1$$

et :

$$R_{(\tau+2)} = R_{(\tau+1)} + \phi_2 = R_\tau + \phi_1 + \phi_2$$

Par récurrence sur i, on obtient sans difficulté :

$$R_{(\tau+i)} = R_\tau + \sum_{k=0}^{i} \phi_k$$

pour tout $i \geq 0$

Posons $R_\tau = 0$, alors le calcul de la moyenne glissante devient, pour tout $i \geq 0$

$$R_{(\tau+i)} = \sum_{k=0}^{i} \phi_k$$

Pour la mise en route du système, on initialise la variable Rτ à zéro. Le procédé vise à optimiser la fréquence des calculs pour faciliter sa mise en oeuvre à l'aide de microprocesseurs de capacité moyenne.

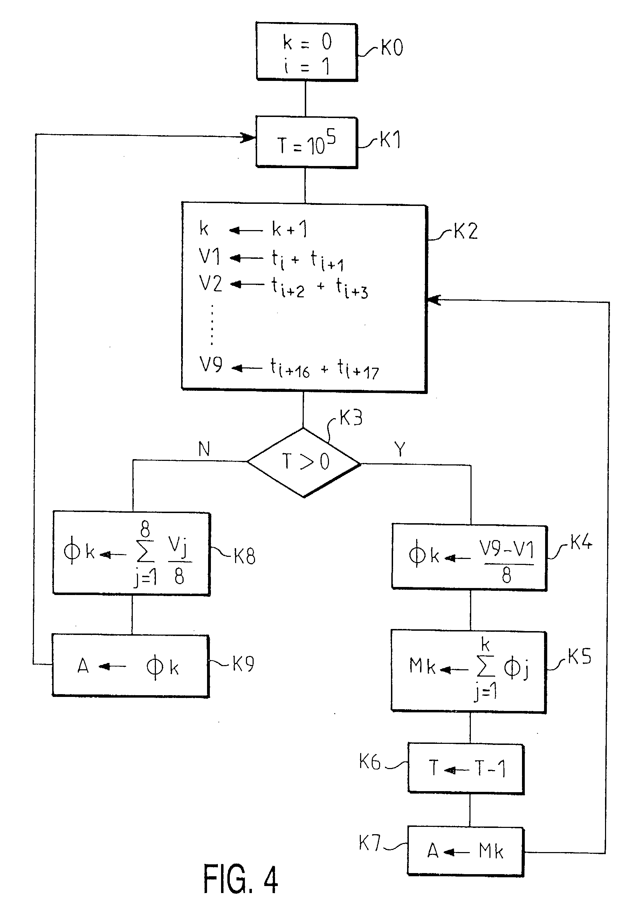

L'organigramme de la figure 4 décompose les différentes étapes du procédé (K0 à K9). Celui-ci peut être avantageusement implanté dans des systèmes pilotés par ordinateur, ou dans des circuits électroniques intégrés pour une utilisation dans des appareils de petite taille.

Une première étape préliminaire au procédé (K0) consiste à initialiser à zéro un indice d'itération k et à initialiser à 1 une variable i utilisée pour numéroter les trames reçues. Une deuxième étape préliminaire (K1) initialise à 100000 une variable de temporisation T .

Une étape de stockage (K2) ajoute un incrément à l'indice k et mémorise sous les variables V1 à V9, les sommes de trames de données d'entrée consécutives prises deux par deux, de sorte que chaque trame $t_i$ à $t_{i+17}$ ne soit prise en compte qu'une seule fois.

Une étape de test (K3) précède l'étape de calcul de moyenne (K4 ou K8) pour tester le signe de la variable T.

S'il est strictement positif (Y) on effectue l'étape (K4) de calcul de la moyenne glissante des trames. Le calcul de la moyenne glissante décrit ci-dessus est rappelé succinctement dans l'organigramme par les instructions K4 et K5. On soustrait ensuite une unité à la variable T (K6). Le résultat final Mk du calcul de moyenne est mémorisé sous la variable A représentant une image numérique destinée à être prélevée au rythme fixé par le débit d'images de sortie. On reprend ensuite le procédé à l'étape K2.

Si la variable T s'annule (N), on effectue le calcul classique (K8) de la moyenne arithmétique des variables V1 à V8 équivalente à la moyenne arithmétique des 16 trames $t_i$ à $t_{i+15}$ en cours de traitement. Le résultat $\Phi k$ (K9) est mémorisé sous la variable A prélevée (comme à l'étape K7) au rythme fixé par le débit d'images de sortie pour être visualisée sur un moniteur. On reprend ensuite le procédé à l'étape K1.

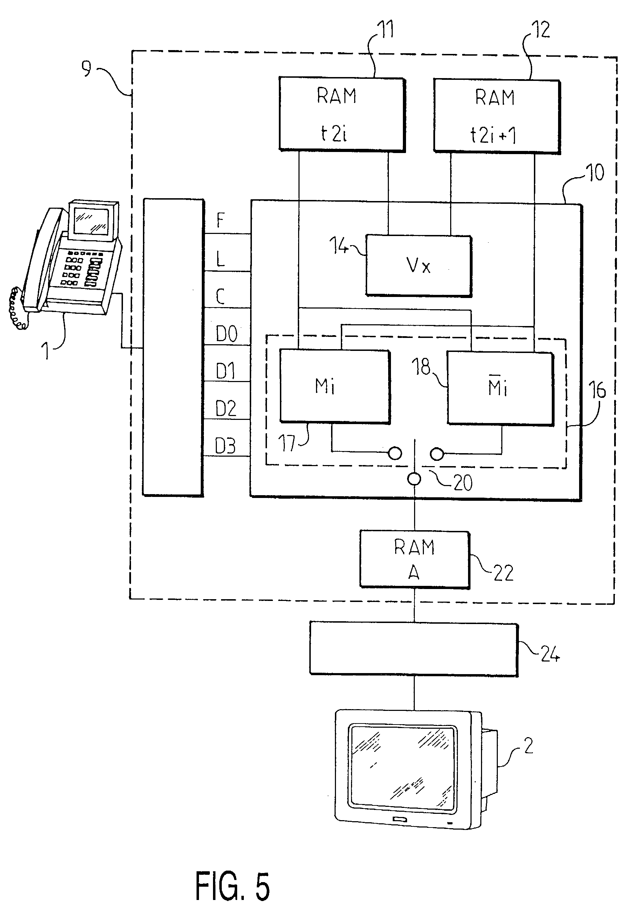

Le mode de réalisation préféré de l'invention va maintenant être décrit en référence au schéma bloc représenté à la figure 5. Dans le dispositif de conversion de débit 9, les calculs sont effectués par un circuit logique programmable du type FPGA (Field Programmable Gate Array). Les informations représentant les trames de données, originellement destinées au LCD sont envoyées en entrée du FPGA par des ports spécifiques F, L, C, D0, D1, D2 et D3. F représente le signal FRAME de synchronisation des trames sur l'écran LCD qui valide l'affichage à l'écran de chaque trame. L représente le signal LOAD de validation de chacune des 240 lignes de l'écran. C est le signal d'horloge CKD qui valide les données D0 à D3 représentant les informations de 4 pixels adjacents sur une ligne de l'écran.

Les trames de données sont stockées dans des mémoires vives 11 et 12 de type RAM (Random Access Memory). Les trames portant un indice pair $t_{2i}$ sont stockées dans la mémoire 11 et les trames portant un indice impair $t_{2i+1}$ sont stockées dans la mémoire 12. Une unité de calcul 14 effectue les sommes de deux trames successives, l'une provenant de la mémoire 11 et l'autre de la mémoire 12 pour fournir les données VX. Un ensemble de cellules de respectivement les moyennes glissante et arithmétique sur 8 données VX successives, VX à V(X+7), l'ensemble des données VX à V(X+7) contenant les informations de 16 trames consécutives. Un dispositif 20, actionné à l'échéance de la variable de temporisation T indiquée à la figure 4, sélectionne momentanément la cellule de calcul de moyenne arithmétique 18 pour déclencher le calcul de la moyenne arithmétique des trames stockées. Le but de cette opération est d'éviter la propagation d'erreurs dues à l'utilisation de résultats de calculs précédents dans les calculs de moyennes glissantes. Une mémoire de visualisation 22 permet de stocker les images calculées à l'aide des moyennes prélevées à la sortie des cellules de calcul 17 et 18. Une interface de visualisation 24 transmet les images stockées vers un dispositif de mise au format vidéo et les affiche sur le moniteur 2.

Bien entendu, l'invention n'est pas limitée aux modes de réalisations qui viennent d'être décrits et représentés. D'autres variantes de mode de réalisation de l'invention apparaîtront à l'homme ou la femme de l'art, en particulier en ce qui concerne les méthodes de calcul de la moyenne glissante, ces variantes ne sortant pas du cadre de l'invention.

## Revendications

1. Procédé de conversion de signaux numériques pour convertir un débit d'images d'entrée en un débit d'images de sortie, lesdites images d'entrée étant formées de trames de données d'entrée, caractérisé en ce qu'il comporte :

   - une étape de stockage pour mémoriser des trames de données d'entrée,
   - une étape de calcul de moyenne pour fournir une moyenne glissante calculée sur une pluralité de trames stockées,
   - une étape de prélèvement desdites moyennes pour fournir les images de sortie à un rythme fixé par le débit d'images de sortie.

2. Procédé selon la revendication 1, caractérisé en ce que l'étape de calcul de moyenne est précédée d'une étape de décision pour déclencher le calcul d'une moyenne arithmétique sur une pluralité de trames stockées.

3. Procédé selon l'une des revendications 1 ou 2, dans lequel les images d'entrée sont formées de 16 trames de données et dans lequel le débit d'images d'entrée est engendré par des images ayant un format compatible avec un écran d'affichage à cristaux liquides.

4. Procédé selon l'une des revendications 1 à 3, caractérisé en ce que le débit d'images de sortie est émis vers un moniteur de visualisation.

5. Dispositif de conversion de signaux numériques pour convertir un débit d'images d'entrée en un débit d'images de sortie, lesdites images d'entrée étant formées de trames de données d'entrée, caractérisé en ce qu'il comporte :

   - des moyens de stockage pour mémoriser des trames de données d'entrée,
   - une cellule de calcul munie d'un moyen pour fournir une moyenne glissante calculée sur une pluralité de trames stockées,
   - un moyen pour prélever lesdites moyennes et pour fournir les images de sortie à un rythme fixé par le débit d'images de sortie.

6. Dispositif selon la revendication 5, caractérisé en ce que la cellule de calcul est munie :

   - d'un moyen pour fournir une moyenne arithmétique calculée sur une pluralité de trames,
   - d'un dispositif de commande pour déclencher le calcul de la moyenne arithmétique.

7. Dispositif selon l'une des revendications 5 ou 6, dans lequel les images d'entrée sont formées de 16 trames et dans lequel le débit d'images d'entrée est fourni par un dispositif pour engendrer des images sur un écran d'affichage à cristaux liquides.

8. Dispositif selon l'une des revendications 5 à 7, caractérisé en ce que le débit d'images de sortie est émis vers un moniteur de visualisation.

## FIG. 1

| $t_1$ | $t_2$ | $t_3$ | $t_4$ | $t_5$ | $t_6$ | $t_7$ | $t_8$ | $t_9$ | $t_{10}$ | $t_{11}$ | $t_{12}$ | $t_{13}$ | $t_{14}$ | $t_{15}$ | $t_{16}$ |
|---|---|---|---|---|---|---|---|---|---|---|---|---|---|---|---|
|  |  |  |  |  |  |  |  |  |  |  |  |  |  |  |  |

## FIG. 2

FIG. 3A

FIG. 3B

EP 0 858 066 A1

FIG. 4

FIG. 5

| | Office européen des brevets | **RAPPORT DE RECHERCHE EUROPEENNE** | Numéro de la demande |
|---|---|---|---|
| | | | EP 98 20 0158 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PATENT ABSTRACTS OF JAPAN vol. 096, no. 005, 31 mai 1996 & JP 08 016128 A (OKI ELECTRIC IND CO LTD), 19 janvier 1996, | 1,2,4-6, 8 | G09G3/36 H04N3/12 |
| Y | * abrégé * | 3,7 | |
| | --- | | |
| Y | US 5 596 349 A (KOBAYASHI MITSUGU ET AL) * colonne 10, ligne 50 - colonne 13, ligne 20 * * colonne 21, ligne 52 - colonne 23, ligne 32 * | 3,7 | |
| | --- | | |
| A | PATENT ABSTRACTS OF JAPAN vol. 014, no. 468 (P-1115), 12 octobre 1990 & JP 02 187788 A (MATSUSHITA ELECTRIC IND CO LTD), 23 juillet 1990, * abrégé * | 1-8 | |
| | --- | | |
| A | PATENT ABSTRACTS OF JAPAN vol. 014, no. 468 (P-1115), 12 octobre 1990 & JP 02 187789 A (MATSUSHITA ELECTRIC IND CO LTD), 23 juillet 1990, * abrégé * | 1-8 | **DOMAINES TECHNIQUES RECHERCHES (Int.Cl.6)** G09G H04N |
| | ----- | | |

Le présent rapport a été établi pour toutes les revendications

| Lieu de la recherche | Date d'achèvement de la recherche | Examinateur |
|---|---|---|
| BERLIN | 26 février 1998 | Materne, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................
& : membre de la même famille, document correspondant

EPO FORM 1503 03.82 (P04C02)